(19) Europäisches Patentamt / European Patent Office / Office européen des brevets

(11) **EP 1 687 157 B1**

(12) **EUROPÄISCHE PATENTSCHRIFT**

(45) Veröffentlichungstag und Bekanntmachung des Hinweises auf die Patenterteilung:
**18.07.2007 Patentblatt 2007/29**

(21) Anmeldenummer: **04818830.4**

(22) Anmeldetag: **17.11.2004**

(51) Int Cl.:
***B60C 23/06*** *(2006.01)*

(86) Internationale Anmeldenummer:
**PCT/EP2004/052987**

(87) Internationale Veröffentlichungsnummer:
**WO 2005/049342 (02.06.2005 Gazette 2005/22)**

(54) **VERFAHREN ZUR BESTIMMUNG REIFENEIGENSCHAFTSABHÄNGIGER ERKENNUNGSSCHWELLEN ZUR VERBESSERTEN ERKENNUNG EINES REIFEN-LUFTDRUCKVERLUSTES IN EINEM INDIREKT MESSENDEN REIFENDRUCK-ÜBERWACHUNGSSYSTEM**

METHOD FOR DETERMINING DETECTION THRESHOLDS DEPENDENT ON TYRE PROPERTIES FOR THE IMPROVED DETECTION OF A LOSS OF TYRE PRESSURE IN AN INDIRECTLY MEASURING TYRE PRESSURE MONITORING SYSTEM

PROCEDE DE DETERMINATION DE SEUILS DE DETECTION DEPENDANT DES PROPRIETES DES PNEUS POUR LA DETECTION AMELIOREE D'UNE PERTE DE PRESSION D'UN PNEU DANS UN SYSTEME DE CONTROLE DE LA PRESSION DES PNEUS A MESURE INDIRECTE

(84) Benannte Vertragsstaaten:
**DE FR IT**

(30) Priorität: **21.11.2003 DE 10354784**
**15.11.2004 DE 102004055092**

(43) Veröffentlichungstag der Anmeldung:
**09.08.2006 Patentblatt 2006/32**

(73) Patentinhaber: **Continental Teves AG & Co. oHG**
**60488 Frankfurt am Main (DE)**

(72) Erfinder:
• **KOUKES, Vladimir**
**64297 Darmstadt (DE)**

• **KÖBE, Andreas**
**64625 Bensheim (DE)**
• **STÖLZL, Stefan**
**69469 Weinheim (DE)**
• **GRIEßER, Martin**
**65760 Eschborn (DE)**
• **SÄGER, Peter**
**61381 Friedrichrichsdorf (DE)**

(56) Entgegenhaltungen:
**EP-A- 1 044 829      DE-A1- 10 060 392**

**Beschreibung**

Die Erfindung betrifft ein Verfahren gemäß Oberbegriff von Anspruch 1, sowie ein Computerprogrammprodukt gemäß Anspruch 5.

Eine zuverlässige Überwachung des Reifenluftdrucks ist für die Sicherheit des Fahrzeuges von großer Bedeutung. Es existieren verschiedene Ansätze, wie die Reifendrucküberwachungssysteme realisiert werden können. Die ersten basieren auf einer direkten Druckmessung im Reifen (TPMS). Solche, z. B. aus der DE 199 38 431 C2 bekannten, direkt messenden Reifendrucküberwachungssysteme (TPMS) überwachen den Reifenluftdruck an allen Rädern mittels in oder an den Fahrzeugrädern bzw. Reifen angebrachten Druckmodulen. Hierbei messen die Druckmodule den jeweiligen Reifenluftdruck oder einen dem Reifenluftdruck proportionalen Wert. Üblicherweise werden die von den Druckmodulen gemessenen Reifenluftdrücke von mit den Druckmodulen verbundenen Sendern an einen oder mehrere am Fahrzeug angeordnete Empfänger mit einer nachgeschalteten Auswerteeinheit gesendet. Durch diese direkte Messung ist das System (TPMS) unabhängig von den Reifeneigenschaften (Reifendurchmesser, Reifenbreite, Sommer-/Winterreifen, etc.). Das direkt messende Reifendrucküberwachungssystem (TPMS) kann einen Reifenluftdruckverlust daher mit einer hohen Genauigkeit bzw. engen Erkennungsschwellen erkennen. Nachteilig an diesem System (TPMS) ist, dass zusätzliche Einrichtungen wie z. B. Druckmodule, Sende- und Empfangseinrichtungen, Auswerteeinheit, etc. benötigt werden, wodurch dieses System (TPMS) teuer und, aufgrund der Vielzahl der zusätzlichen Einrichtungen, fehleranfällig ist.

Ein weiteres, auf einer indirekten Druckmessung basierendes System, beispielsweise in DE 100 58 140 A1 beschrieben, wertet zur Erkennung eines Druckverlustes die Raddrehzahlen oder den Raddrehzahlen proportionale Größen der einzelnen Räder aus. Solche indirekt messenden Reifendrucksysteme sind billig und zuverlässig, da sie meist die bereits in den Fahrzeugen vorhandenen Raddrehzahlsensoren eines Anti-Blockier-Systems (ABS) zur Ermittlung der Raddrehzahlen benutzen. Nachteilig an diesem System ist, dass die Raddrehzahlen stark von den Reifeneigenschaften abhängig sind. Um auch bei unterschiedlichen Reifen, z. B. beim Wechsel von üblicherweise breiten Sommerreifen auf schmalere Winterreifen, keine den Fahrzeugführer irritierenden Fehlwarnungen zu erzeugen, werden die Erkennungsschwellen hinsichtlich eines Reifenluftdruckverlustes weiter gewählt. Hierdurch wird dem Fahrzeugführer ein Reifenluftdruckverlust allerdings erst relativ spät angezeigt.

Ferner sind z. B. aus DE 100 60 392 A1 und EP 1044829 A2 auch kombinierte Systeme bekannt, welche sowohl ein direkt messendes Reifendrucküberwachungssystem als auch ein indirekt messendes Reifendrucküberwachungssystem aufweisen. In solchen kombinierten Systemen wird beispielsweise das indirekt messende Reifendrucküberwachungssystem dazu benutzt, um die Druckmodule in den Rädern einer Einbauposition, z. B. Druckmodul "1" befindet sich an der Einbauposition "Rad vorne links" ; Druckmodul "2" befindet sich an der Einbauposition "Rad hinten rechts", etc., zuzuweisen.

Aufgabe der Erfindung ist, es ein Verfahren bereitzustellen, welches das indirekt messende Reifendrucküberwachungssystem in einem kombinierten System dahingehen verbessert, dass eine Anpassung der Erkennungsschwellen abhängig von den Reifeneigenschaften erfolgt, wodurch dem Fahrzeugführer ein Reifenluftdruckverlust frühzeitig angezeigt wird.

Diese Aufgabe wird erfindungsgemäß durch das Verfahren nach Anspruch 1 gelöst.

Normalerweise ist die Gummimischung von Sommerreifen härter als die Gummimischung von Winterreifen, d. h., dass Sommerreifen eine höhere Steifigkeit der Gummimischung aufweisen als Winterreifen. Aus diesem Grund zeigen Sommerreifen größere Änderungen des Reifenabrollumfangs bei einer Druckänderung als Winterreifen. Bei sogenannten Breitreifen ist ebenfalls die Änderung des Reifenabrollumfangs bei einer Druckänderung größer als bei schmalen Reifen.

Erfindungsgemäß werden unter dem Begriff "Raddrehzahlsignal" sowohl die Raddrehzahl an sich, als auch von der Raddrehzahl abhängige Größen, wie beispielsweise die Radgeschwindigkeit oder der Abrollumfang des Rades, verstanden. Ferner soll unter dem Begriff "Raddrehzahlsignal" auch eine Zeit verstanden werden, welche benötigt wird, um einen bestimmten Weg, beispielsweise ein Weg, welcher ein oder mehreren Radumdrehungen entspricht, zurückzulegen. Dieser Weg kann auch von der Fahrzeuggeschwindigkeit abhängig sein, indem bei unterschiedlichen Fahrzeuggeschwindigkeiten unterschiedliche Zeiten für identische oder verschiedene Wege als Grundlage für die Berechnung verwendet werden. Beispielsweise wird bei einer Fahrzeuggeschwindigkeit von 50 km/h die Zeit gemessen, welche für zwei Radumdrehungen benötigt wird, während bei einer Fahrzeuggeschwindigkeit von 100 km/h die Zeit gemessen wird, welche für fünf Radumdrehungen benötigt wird.

Unter dem Begriff "Beiwert k" soll erfindungsgemäß ein Wert verstanden werden, welcher die Reifeneigenschaften, wie z. B. Reifendurchmesser, Reifenbreite, Sommer-/Winterreifen, etc., eines oder mehrerer Fahrzeugreifen beschreibt. Der Beiwert $k_{VL}$ steht hierbei für die Reifeigenschaften des Rades vorne links, der Beiwert $k_{VR}$ für die Reifeneigenschaften des Rades vorne rechts, der Beiwert $k_{HL}$ für die Reifeneigenschaften des Rades hinten links und der Beiwert $k_{HR}$ für die Reifeneigenschaften des Rades hinten rechts.

Vorzugsweise wird der Beiwert k aus der Raddrehzahl n, insbesondere der relativen Raddrehzahländerung Δn/n, und dem direkt gemessenen Reifenluftdruck P, insbesondere der relativen Reifendruckänderung $\Delta P/P_{soll}$, bestimmt.

Ganz besonders bevorzugt erfolgt die Bestimmung des Beiwertes k durch eine lineare Funktion, in welcher im wesentlichen die relative Raddrehzahländerung Δn/n gleich dem Produkt aus dem Beiwert k und der relativen Reifendruckänderung $\Delta P/ P_{soll}$ ist.

In einer bevorzugten Ausführungsform des erfindungsgemäßen Verfahrens erfolgt die Einstellung des Sollreifenluftdrucks $P_{soll}$ durch den Fahrzeugführer.

In einer weiteren bevorzugten Ausführungsform des erfindungsgemäßen Verfahrens wird mittels des direkt messenden Reifendrucküberwachungssystems (TPMS) überprüft, ob der Sollreifenluftdruck $P_{soll}$ eingestellt ist.

Vorteilhafterweise wird das erfindungsgemäße Verfahren durch das manuelle Betätigen, bevorzugt durch den Fahrzeugführer, einer Auslöseeinrichtung gestartet. Bevorzugt handelt es sich bei der Auslöseeinrichtung um einen Schalter oder Taster.

Weitere bevorzugte Ausführungsformen des erfindungsgemäßen Verfahrens gehen aus den Unteransprüchen hervor. Die Erfindung wird im Folgenden anhand eines Ausführungsbeispiels beschrieben.

Bei dem indirekt messenden Reifendrucküberwachungssystem werden Informationen über die Radgeschwindigkeiten bzw. die Abrollumfänge der Räder durch Auswertung von Raddrehzahlsensoren ermittelt. Diese Raddrehzahlsensoren sind in vielen modernen Fahrzeugen bereits verbaut um z. B. Raddrehzahlinformationen für ein Anti-Blockier-System (ABS) bereitzustellen. Die Änderung des Radabrollumfangs hängt hierbei von dem Reifenluftdruck und von den Reifeneigenschaften (Reifendruchmesser, Reifenbreite, Gummigemischeigenschaften, Karkassensteifigkeit etc.) ab. Durch die Betrachtung und Auswertung der Abrollumfänge der Räder werden Kriterien für einen Reifenluftdruckverlust festgelegt. Hierzu sind u. a. Erkennungsschwellen notwendig bei deren Über- bzw. Unterschreitung auf einen Reifenluftdruckverlust erkannt wird. Die Erkennungsschwellen sind hierbei abhängig von den Reifeneigenschaften bzw. dem auf den Rädern montierten Reifentyp. Die Erkennungsschwellen und die Empfindlichkeit des indirekt messenden Reifendrucküberwachungssystems werden so angepasst, dass einerseits ein Reifenluftdruckverlust in allen für das Fahrzeug zugelassenen Reifentypen erkannt wird, und anderseits keine Fehlwarnungen gegeben werden. Diese Anpassung erfolgt durch Auswertung der Messergebnisse eines oder mehrerer Druckmodule des direkt messende Reifendrucküberwachungssystems (TPMS).

Das indirekt messende Reifendrucküberwachungssystem basiert, wie oben gesagt, auf Raddrehzahlsensoren. Diese Raddrehzahlsensoren sind fest einem Rad (Rad vorne links, Rad vorne rechts, Rad hinten links, Rad hinten rechts) zugeordnet. Hierdurch ist bekannt, von welchem Rad die betreffende Drehzahlinformation (z. B. $n_{VL}$: Drehzahl des Rades vorne links) stammt. Weiterhin sind bereits Verfahren bekannt (z. B. aus DE 100 60 392 A1), um auch die in oder an den Rädern angebrachten Druckmodule des direkt messenden Reifendrucküberwachungssystems (TPMS) zu lokalisieren. Durch diese bekannten Verfahren können direkt gemessene Reifenluftdrücke einem Rad zugeordnet werden (z. B. $P_{VL}$: Reifenluftdruck des Rades vorne links).

Bei dem beispielgemäßen Verfahren werden die folgenden Schritte durchgeführt:

1. Erfassen von Raddrehzahlsignalen n der Fahrzeugräder,
2. Erfassen von direkt gemessenen Reifenluftdrücken P,
3. Einlernen mindestens eines Referenzwerts in Abhängigkeit der erfassten Raddrehzahlsignale n bei einem vorgegebenen Sollreifenluftdruck $P_{soll}$,
4. Ermitteln eines Beiwerts k, welcher die Reifeneigenschaften der Fahrzeugreifen beschreibt, aus Raddrehzahländerungen Δn bei einer Reifenluftdruckänderung ΔP, und
5. Bestimmen einer reifeneigenschaftsabhängigen Erkennungsschwelle S zur verbesserten Erkennung eines Reifenluftdruckverlustes aus dem ermittelten Beiwert k, einem festgelegten kritischen Reifenluftdruckverlust $\Delta P_{krit}$, welcher einen Reifenluftdruckwert beschreibt bei dessen Unter- bzw. Überschreitung eine Warnung hinsichtlich eines Reifenluftdruckverlustes an den Fahrzeugführer ausgegeben werden soll, und einem vorgegebenen Sollreifenluftdruck $P_{soll}$.

Zur Durchführung des beispielgemäßen Verfahrens ist es notwendig, dass alle Reifen des Fahrzeugs den vorgeschriebenen Sollreifenluftdruck, z. B. 2,0 bar, aufweisen. Hierzu wird beispielsweise jeder Reifen manuell, z. B. durch den Fahrzeugführer, auf den vom Fahrzeughersteller vorgeschriebenen Sollreifenluftdruck gebracht (z. B. $P_{sollVL}$ = $P_{sollVR}$ = $P_{sollHL}$ = $P_{sollHR}$ = 2,0 bar). Alternativ kann auch der vorliegende Reifenluftdruck von dem direkt messenden Reifendrucküberwachungssystem (TPMS) dahingehend überprüft werden, ob der vorliegende Reifenluftdruck dem Sollreifenluftdruck entspricht. Anschließend wird das beispielgemäße Verfahren z. B. durch die Betätigung eines Resettasters gestartet. In der sogenannten Einlernphase werden die Referenzwerte, z. B. DIAG, SIDE, AXLE des indirekt messenden Reifendrucküberwachungssystems aus den Raddrehzahlen n eingelernt und abgespeichert.

$$DIAG = \frac{n_{VL} + n_{HR}}{n_{VR} + n_{HL}} - 1 = \frac{n_{VL} + n_{HR} - n_{VR} - n_{HL}}{n_{VR} + n_{HL}},$$

$$SIDE = \frac{n_{VL} + n_{HL}}{n_{VR} + n_{HR}} - 1 = \frac{n_{VL} + n_{HL} - n_{VR} - n_{HR}}{n_{VR} + n_{HR}}, \qquad (1)$$

$$AXLE = \frac{n_{HL} + n_{VR}}{n_{HL} + n_{HR}} - 1 = \frac{n_{VL} + n_{VR} - n_{HL} - n_{HR}}{n_{HL} + n_{HR}},$$

$n_{VL}$, $n_{VR}$, $n_{HL}$, $n_{HR}$ sind die Raddrehzahlen der Räder "Vorne Links", "Vorne Rechts", "Hinten Links" und "Hinten Rechts" bei einem Sollreifenluftdruck $P_{soll}$.

Nach Abschluss der Einlernphase werden die Änderungen mindestens eines Referenzwerts, z. B. ΔDIAG bezüglich des eingelernten Wertes ermittelt, z. B.:

$$\Delta DIAG = \frac{\Delta n_{VL} + \Delta n_{HR} - \Delta n_{VR} - \Delta n_{HL}}{n_{VR} + n_{HL}}, \qquad (2)$$

Hierbei hängen die einzelnen Raddrehzahländerungen $\Delta n$ im wesentlichen von der Reifenluftdruckänderungen $\Delta P$ der zugehörigen Räder ab.

Die Raddrehzahländerungen $\Delta n$ sind klein und in einer ersten Näherung den Druckänderungen $\Delta P$ proportional:

$$\frac{\Delta n}{n} \approx k \cdot \frac{\Delta P}{P_{soll}} \qquad (3)$$

$\Delta P/P_{soll} = (P_{ist}-P_{soll})/P_{soll}$, (z. B. $\Delta P_{VL}/P_{sollVL} = (P_{istVL}-P_{sollVL})/P_{sollVL}$; mit $P_{istVL}$: gemessener Istreifenluftdruck vom Rad vorne links; $P_{sollVL}$: beim Lernen eingestellter Sollreifenluftdruck vom Rad vorne links). Die Änderung des Referenzwertes (z. B. ΔDIAG) ist eine lineare Kombination der Druckänderungen, z. B.:

$$\Delta DIAG = k_{VL} \cdot \frac{\Delta P_{VL}}{P_{sollVL}} + k_{HR} \cdot \frac{\Delta P_{HR}}{P_{sollHR}} - k_{VR} \cdot \frac{\Delta P_{VR}}{P_{sollVR}} - k_{HL} \cdot \frac{\Delta P_{HL}}{P_{sollHL}} \qquad (4)$$

Nach N Reifendruckänderungen sind im System N Referenzwerte, hier Δ DIAG-Werte, und N $\Delta P/P_{soll}$-Werte vorhanden. Auf der Basis der Regressionsmethode (Methode der kleinsten Quadrate) werden die Beiwerte $k_{VL}$, $k_{VR}$, $k_{HL}$, $k_{HR}$ kalkuliert. Je größer N ist, desto genauer werden die Beiwerte $k_{VL}$, $k_{VR}$, $k_{HL}$, $k_{HR}$ kalkuliert, deswegen werden die Beiwerte $k_{VL}$, $k_{VR}$, $k_{HL}$, $k_{HR}$ nach jeder neuen Reifenluftdruckänderung neu berechnet. Wenn die Beiwerte $k_{VL}$, $k_{VR}$, $k_{HL}$, $k_{HR}$ für jedes Rad separat ermittelt wurden, werden die Erkennungsschwellen S für das indirekt messende Reifendrucküberwachungssystem abhängig von den Beiwerten $k_{VL}$, $k_{VR}$, $k_{HL}$, $k_{HR}$ für jedes Rad bestimmt. Hierzu wird ein kritischer Reifenluftdruckverlust $\Delta P_{krit}$, z. B. $\Delta P_{krit}=0,5$ bar, oder z. B. $\Delta P_{krit}/P_{soll} = 25$ %, definiert, bei dessen Überschreitung eine Warnung an den Fahrzeugführer gegeben werden soll. In diesem Beispiel wurde von einem Sollreifenluftdruck von $P_{soll} = 2,0$ bar ausgegangen, und es soll somit bei Unterschreitung eines Istreifenluftdrucks von $P_{ist} = P_{soll} - \Delta P_{krit}$ = 2,0 bar - 0,5 bar = 1,5 bar eine Warnung ausgegeben werden. Unter Berücksichtigung der Gleichung (4) ergibt sich somit zumindest ein kritischer Referenzwert, hier $(\Delta DIAG_{krit})_{xy}$, für das Rad "xy" von:

$$(\Delta DIAG_{krit})_{xy} \; = \; k_{xy} \; \cdot \; \frac{\Delta P_{krit}}{P_{soll}} \qquad\qquad (5)$$

Da bei Überschreitung des kritischen Referenzwerts, hier $\Delta DIAG_{krit}$ , der Fahrzeugführer gewarnt werden soll, folgt somit für die Erkennungsschwelle S für das Rad "xy":

$$S_{xy} \; < \; \left|(\Delta DIAG_{krit})_{xy}\right| \qquad\qquad (6)$$

Wenn alle Räder gleiche oder fast gleiche Eigenschaften aufweisen, kann das Annäherungsverhältnis benutzt werden:

$$k \approx k_{VL} \approx k_{VR} \approx k_{HR} \approx k_{HL} \qquad\qquad (7)$$

Wenn die Räder unterschiedliche Beiwerte aufweisen, so wird ein aus den unterschiedlichen Beiwerten gemittelter Beiwert für die weiteren Berechnungen verwendet.
Aus den Gleichungen (6) und (7) lässt sich somit die Erkennungsschwelle S des indirekt messenden Reifendrucküberwachungssystems unter Berücksichtigung der Reifeneigenschaften (dargestellt durch den Beiwert k) bestimmen:

$$S \; < \; \left|k \; \cdot \; \frac{\Delta P_{krit}}{P_{soll}}\right| \qquad\qquad (8)$$

Bei manchen Fahrzeugtypen besteht auch die Möglichkeit, dass der Reifentyp (z. B. Sommer-, Winter-, oder Ganzjahresreifen) und die Reifendimensionen (z. B. Breite, Höhe, Felgendurchmesser) über eine spezielle Funktion einer Multifunktionsanzeige oder in der Werkstatt z. B. über die Fahrzeugsdiagnose eingegeben werden können. Diese Informationen (Reifentyp, Reifendimensionen) können dem indirekt messenden Reifendrucküberwachungssystem übermittelt werden. Aufgrund dieser Informationen passt das indirekt messende Reifendrucküberwachungssystem die Erkennungsschwellen hinsichtlich eines Reifendruckverlusts im Hinblick auf den vorliegenden Reifentyp und die Reifendimensionen an.
Eine weitere Möglichkeit besteht darin, die Informationen über den Reifentyp und die Dimensionen von einer eingebauten Einheit im Reifen, z. B. von einem magnetischen Barcodeträger oder von einer Sendeeinheit, z. B. einem Transponder, auszulesen.
Die Erkennungsschwellen und andere Parameter von Reifendruckkontrollsystemen können abhängig von den übermittelten Reifenparametern kalkuliert werden. Beispielsweise wird die Erkennungsschwelle S nach folgender Gleichung bestimmt:

$$S \; = \; S_0 \cdot A \cdot B \qquad\qquad (9)$$

mit

$S_0$: Normalerkennungsschwelle, welche eine Erkennungsschwelle für einen festgelegten Reifentyp mit festgelegten Dimensionen beschreibt,
A: eine Funktion des Reifentyps (Winterreifen, Sommerreifen, Ganzjahresreifen u.s.w.),B: eine Funktion der Reifendimensionen (z. B. Breite).

Eine weitere Möglichkeit besteht darin, eine Datenbank der Reifen und der zugehörigen Parameter des Reifendrucküberwachungssystems in einem Fahrzeugsteuergerät, beispielsweise in der elektronischen Bremsensteuereinheit (ECU), abzuspeichern.

**Patentansprüche**

1. Verfahren zur Bestimmung reifeneigenschaftsabhängiger Erkennungsschwellen zur verbesserten Erkennung eines Reifenluftdruckverlustes in einem indirekt messenden Reifendrucküberwachungssystem, welches folgende Schritte umfasst:

   - Erfassen von Raddrehzahlsignalen (n) der Fahrzeugräder,
   - Erfassen von mindestens einem direkt gemessenen Reifenluftdruck (P),
   - Einlernen von mindestens einem Referenzwert in Abhängigkeit der erfassten Raddrehzahlsignale (n) bei einem vorgegebenen Sollreifenluftdruck ($P_{soll}$),
   - Ermitteln von mindestens einem Beiwert (k), welcher die Reifeneigenschaften mindestens eines Fahrzeugreifens beschreibt, aus Raddrehzahländerungen ($\Delta$n) bei einer Reifenluftdruckänderung ($\Delta$P), und **gekennzeichnet durch** die Schritte:

      - Bestimmen mindestens einer reifeneigenschaftsabhängigen Erkennungsschwelle (S) zur verbesserten Erkennung eines Reifenluftdruckverlustes aus dem ermittelten Beiwert (k), einem festgelegten kritischen Reifenluftdruckverlust ($\Delta P_{krit}$), welcher einen Reifenluftdruckwert beschreibt bei dessen Unter- bzw. Überschreitung eine Warnung hinsichtlich eines Reifenluftdruckverlustes an den Fahrzeugführer ausgegeben werden soll, und einem vorgegebenen Sollreifenluftdruck ($P_{soll}$).

2. Verfahren nach Anspruch 1, **dadurch gekennzeichnet, dass** das Einlernen des mindestens einen Referenzwerts erst nach Betätigung einer Auslöseeinrichtung, welche das Befüllen der Fahrzeugreifen mit dem vorgegebenen Sollreifenluftdruck ($P_{soll}$) anzeigt, durchgeführt wird.

3. Verfahren nach Anspruch 1, **dadurch gekennzeichnet, dass** der direkt gemessene Reifenluftdruck (P) mittels Druckmodule, welche in oder an dem Reifen bzw. dem Rad angeordnet sind, erfasst wird.

4. Verfahren nach Anspruch 1, **dadurch gekennzeichnet, dass** der mindestens eine Referenzwert gemäß mindestens einer der Formeln

$$DIAG = \frac{n_{VL} + n_{HR}}{n_{VR} + n_{HL}} - 1,$$

oder

$$SIDE = \frac{n_{VL} + n_{HL}}{n_{VR} + n_{HR}} - 1,$$

oder

$$AXLE = \frac{n_{VL} + n_{VR}}{n_{HL} + n_{HR}} - 1$$

aus den Raddrehzahlen ($n_{VL}$, $n_{HL}$, $n_{VR}$, $n_{HR}$) der einzelnen Räder (VL, HL, VR, HR) bei einem definierten Sollreifenluftdruck ($P_{soll}$) bestimmt wird.

5. Computerprogrammprodukt zur Durchführung aller Schritte eines Verfahrens gemäß mindestens einem der Ansprüche 1 bis 4.

**Claims**

1. Method for determining detection thresholds dependent on tire properties for the improved detection of a loss of tire pressure in an indirectly measuring tire pressure monitoring system, comprising the following the steps of:

   - detecting wheel speed signals (n) of the vehicle wheels,
   - detecting at least one directly measured tire inflation pressure (P),
   - learning at least one reference value depending on the detected wheel speed signals (n) at a predetermined nominal tire inflation pressure ($P_{nominal}$),
   - determining at least one coefficient (k) which describes the characteristics of at least one vehicle tire from wheel speed variations ($\Delta n$) at a tire inflation pressure variation ($\Delta P$), and

   **characterized by** the steps of:

   determining at least one detection threshold (S) that depends on tire characteristics for the improved detection of tire inflation pressure loss from the coefficient (k) found, from a designated critical tire inflation pressure loss ($\Delta P_{crit}$) that describes a tire inflation pressure value which, when it is not reached or is exceeded, causes a warning indicating tire inflation pressure loss to be given to the driver of the vehicle, as well as from a predefined nominal tire inflation pressure ($P_{nominal}$).

2. Method as claimed in claim 1,
   **characterized in that** the learning operation of the at least one reference value is carried out only after actuation of a trigger mechanism which indicates that the vehicle tires are filled with the predetermined nominal inflation pressure ($P_{nominal}$) .

3. Method as claimed in claim 1,
   **characterized in that** the directly measured tire inflation pressure (P) is sensed by means of pressure modules which are arranged in or at the tire or the wheel.

4. Method as claimed in claim 1,
   **characterized in that** the at least one reference value is determined from the wheel speeds ($n_{FL}$, $n_{RL}$, $n_{FR}$, $n_{RR}$) of the individual wheels (FL, RL, FR, RR) at a defined nominal tire inflation pressure ($P_{nominal}$) according to at least one of the formulas

$$DIAG = \frac{n_{FL} + n_{RR}}{n_{FR} + n_{RL}} - 1,$$

, or

$$SIDE = \frac{n_{FL} + n_{RL}}{n_{FR} + n_{RR}} - 1,$$

or

$$AXLE = \frac{n_{FL} + n_{FR}}{n_{RL} + n_{RR}} - 1.$$

**5.** Computer program product for implementing all steps of a method as claimed in at least any one of claims 1 to 4.

**Revendications**

**1.** Procédé pour déterminer des seuils de détection dépendant des propriétés de pneu pour la détection améliorée de perte de pression de pneu dans un système de surveillance de pression de pneu à mesure indirecte, qui comprend les étapes suivantes :

- relevé de signaux de vitesse de rotation de roue (n) des roues d'un véhicule,
- relevé d'au moins une pression de pneu (P) mesurée directement,
- apprentissage d'au moins une valeur de référence en fonction des signaux de vitesse de rotation de roue (n) relevés pour une pression de pneu de consigne ($P_{soll}$) prédéfinie,
- détermination d'au moins un coefficient (k) qui décrit les propriétés de pneu d'au moins un pneu de véhicule à partir de variations de la vitesse de rotation de roue ($\Delta n$) pour une variation de pression de pneu ($\Delta P$), et **caractérisé par** les étapes suivantes :

- détermination d'au moins un seuil de détection (S) dépendant de propriétés de pneu pour la détection améliorée d'une perte de pression de pneu à partir du coefficient (k) déterminé, d'une perte de pression de pneu critique ($\Delta P_{krit}$) définie qui décrit une valeur de pression de pneu pour le sous-dépassement ou dépassement de laquelle un avertissement relatif à une perte de pression de pneu doit être délivré au conducteur du véhicule, et d'une pression de pneu de consigne ($P_{soll}$) prédéfinie.

**2.** Procédé selon la revendication 1, **caractérisé en ce que** l'apprentissage de la au moins une valeur de référence n'est exécuté qu'après actionnement d'un dispositif de déclenchement qui indique le gonflage des pneus du véhicule à la pression de pneu de consigne ($P_{soll}$) prédéfinie.

**3.** Procédé selon la revendication 1, **caractérisé en ce que** la pression de pneu (P) mesurée directement est relevée au moyen de modules de pression qui sont disposés dans ou sur le pneu ou la roue.

**4.** Procédé selon la revendication 1, **caractérisé en ce que** la au moins une valeur de référence est déterminée selon l'une au moins des formules suivantes

$$DIAG = \frac{n_{VL} + n_{HR}}{n_{VR} + n_{HL}} - 1,$$

ou

$$SIDE = \frac{n_{VL} + n_{HL}}{n_{VR} + n_{HR}} - 1,$$

ou

$$AXLE = \frac{n_{VL} + n_{VR}}{n_{HL} + n_{HR}} - 1$$

à partir des vitesses de rotation de roue ($n_{VL}$, $n_{HL}$, $n_{VR}$, $n_{HR}$) des différentes roues (VL, HL, VR, HR) pour une pression de pneu de consigne ($P_{soll}$) définie.

5. Produit de programme d'ordinateur pour l'exécution de toutes les étapes d'un procédé selon l'une au moins des revendications 1 à 4.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19938431 C2
- DE 10058140 A1
- DE 10060392 A1
- EP 1044829 A2